# EUROPÄISCHE PATENTSCHRIFT

(11) **EP 1 356 261 B1**
(45) Veröffentlichungstag und Bekanntmachung des Hinweises auf die Patenterteilung: **04.08.2004**
(21) Anmeldenummer: 02706599.4
(22) Anmeldetag: 19.01.2002
(51) Int. Cl.: G01N 1/06

(54) **MIKROTOM**
MICROTOME
MICROTOME

(30) Priorität: 01.02.2001 DE 10104432
(43) Veröffentlichungstag der Anmeldung: 29.10.2003
(73) Patentinhaber: Hess Consult GMBH, 69181 Leimen (DE)
(72) Erfinder: HESS Hans-Jürgen, 69181 Leimen (DE)
(74) Vertreter: Köhler, Walter, Dr.-Ing.
(86) Internationale Anmeldenummer: PCT/DE2002/000157
(87) Internationale Veröffentlichungsnummer: WO 2002/061393

(56) Entgegenhaltungen:
- DE-B- 1 772 331
- DE-C- 186 704
- DE-U- 8 809 096
- US-A- 1 513 093
- US-A- 1 925 181
- US-A- 3 727 506
- US-A- 3 733 948
- US-A- 5 533 342
- B V BORRIES ET AL: "Über ein Ultramikrotom" ZEITSCHRIFT FÜR WISSENSCHAFTLICHE MIKROSKOPIE UND MIKROSKOPISCHE TECHNIK, Bd. 63, 1958, Seiten 484-494, XP008008881 stuttgart, de in der Anmeldung erwähnt

## Beschreibung

Die Erfindung betrifft ein Mikrotom mit einem Grundgestell, an dem eine Objekthalteeinrichtung zur Durchführung einer vertikalen Schnittbewegung vorgesehen ist, und mit einer Messerhalteeinrichtung für ein Schneidelement, das von einem Schneidmesser oder einer mit einem Klingenhalter kombinierten Schneidklinge gebildet ist.

Bei einem solchen Mikrotom kann es sich um ein Tisch-Mikrotom oder um ein Kryostat-Mikrotom handeln.

Die DE 42 05 257 C2 beschreibt ein Rotationsmikrotom mit einer Grundplatte, an der rückseitig ein Grundgestell mit einem Mikrotomgehäuse und an der vorderseitig eine Messerhalteeinrichtung angeordnet sind. Zur Aufnahme von Dünnschnitten einer in der Objekthalteeinrichtung des Rotationsmikrotomes eingespannten Dünnschnittprobe ist bei diesem bekannten Rotationsmikrotom eine Wanne vorgesehen, die zwei voneinander beabstandete Seitenteile und ein die Seitenteile miteinander verbindendes Vorderteil aufweist. Die Wanne besitzt also eine U-förmige Grundfläche, die die Messerhalteeinrichtung dreiseitig angepaßt umschließt. Die beiden Seitenteile der Wanne mit U-förmiger Grundfläche schließen mit dem rückseitigen Mikrotomgehäuse außenseitig zumindest annähernd bündig ab.

Ein Mikrotom mit einem Steuerpult, das Bedienungselemente zur Einstellung verschiedener Parameter wie Schnittdicken-Zustellgeschwindigkeit, Trimmschnittdicke, Schnittdicke und gegebenenfalls eine Anzeigeeinrichtung zur Anzeige der eingestellten Parameter aufweist, ist aus der DE 42 05 258 C2 bekannt. Dieses bekannte Mikrotom weist einen Aufnahmeabschnitt auf, der zur lösbaren Befestigung des Steuerpultes ausgebildet ist. Auch bei diesem bekannten Mikrotom ist das Grundgestell mit dem Mikrotomgehäuse am rückseitigen Endabschnitt einer Grundplatte angeordnet und die Messerhalteeinrichtung am vorderseitigen Endabschnitt der Grundplatte.

Bei bekannten Mikrotomen, insbesondere Rotationsmikrotomen, ist üblicherweise eine Grundplatte vorhanden, an deren rückseitigem Endabschnitt das Grundgestell und an deren vorderseitigem Endabschnitt die Messerhalteeinrichtung angeordnet sind. Eine solche Grundplatte und die Montage des Grundgestells und der Messerhalteeinrichtung an der Grundplatte bedingen einen Montageaufwand, der sich auf die Herstellungskosten eines solchen bekannten Mikrotomes auswirkt. Die Grundplatte und die Montage des Grundgestelles und der Messerhalteeinrichtung an der Grundplatte können außerdem die Verwindungssteifigkeit und die Stabilität des Mikrotoms beim Wirksamwerden der Schneidkräfte negativ beeinflussen.

Aus der DE 38 30 725 A1 ist ein Mikrotom mit einer Antriebseinrichtung bekannt, die eine Welle mit einem daran angeordneten Handrad mit einem Handgriff aufweist. Zur Arretierung der Antriebseinrichtung ist am Gehäuserahmen des Mikrotoms ein Elektromagnet angeordnet. Der Elektromagnet steht in Wirkverbindung mit einem axial auf der Welle verschiebbaren Schaltring. Eine mit dem Elektromagnet und mit einem Sensor verbundene Steuereinrichtung steuert den Elektromagnet in Abhängigkeit von einem Signal des Sensors. Dieses bekannte Mikrotom weist ein Grundgestell mit einer Objekthalteeinrichtung auf. Vom Grundgestellt steht unterseitig eine Grundplatte nach vorne. Vom Vorderrand der Grundplatte stehen zwei seitliche Säulen vertikal nach oben, zwischen welchen ein Schneidmesser angeordnet ist.

Die DE 88 09 096 U1 offenbart ein Mikrotom mit einem Gehäuse, an dem Bedienknöpfe angeordnet sind, die mit einem Getriebe zur manuellen Einstellung der am Mikrotom wählbaren Parameter wie Schnittdicke, Messerwinkel usw. verbunden sind. Bei diesem bekannten Mikrotom sind beidseitig Koaxial-Bedienknöpfe vorgesehen, die wechselseitig im Mikrotomgehäuse versenkbar sind.

Die DE-Z: "Zeitschrift für wissenschaftliche Mikroskopie und mikroskopische Technik", 63 (1958), Seiten 484 bis 494, zeigt klassische Mikrotom-Konstruktionen mit einer Grundplatte, an der rückseitig ein Grundgestell mit einer Objekthalteeinrichtung und an der vorderseitig eine Messerhalteeinrichtung angebracht ist. Die Grundplatte weist z.B. ein umgekehrt U-förmiges Querschnittsprofil auf, worauf sich wiederum ein Musterträgerschlitten mit Messerhalter befindet, so daß die Arbeits- und Manipulationsebene für den Bediener des Mikrotoms relativ hoch vorgesehen ist. Das ist unter ergonomischen Gesichtspunkten nachteilig. Entsprechendes gilt auch für das aus dem Prospekt der Firma Leitz, Wetzlar: "Serienschnittmikrotom", 1510 (1974), Seite 2, bekannte Mikrotom, das ebenfalls ein vom rückseitigen Grundgestell mit der Objekthalteeinrichtung unterseitig wegstehendes kastenförmiges Grundelement aufweist, auf dem die als Messerbock ausgebildete Messerhalteeinrichtung verstellbar angebracht ist. Das Grundelement weist eine relativ große Höhenabmessung auf, was sich auf die Ergonomie und den Bedienkomfort nachteilig auswirkt.

Der Erfindung liegt die Aufgabe zugrunde, ein Mikrotom der eingangs genannten Art zu schaffen, bei dem erhebliche Kosteneinsparungen realisierbar sind, die mit einer wesentlich erhöhten Verwindungssteifigkeit und Stabilität beim Wirksamwerden der Schneidkräfte einhergeht.

Diese Aufgabe wird bei einem Mikrotom der eingangs genannten Art erfindungsgemäß dadurch gelöst, daß die Messerhalteeinrichtung zwei gleich ausgebildete Seitenwangen aufweist, die vom unteren Endabschnitt des Grundgestelles nach vorne wegstehen und die Grundfläche des Grundgestelles nach vorne verlängern, so daß beide Seitenwangen für das Grundgestell eine Standflächenvergrößerung bilden. Dabei können die beiden Seitenwangen der Messerhalteeinrichtung mit dem Grundgestell verschraubt oder verschweißt sein. Bevorzugt ist es jedoch, wenn die beiden Seitenwangen der Messerhalteeinrichtung mit dem Grundgestell einstückig ausgebildet, d.h. in einem Stück gegossen sind.

Das erfindungsgemäße Mikrotom, insbesondere Rotationsmikrotom, verzichtet also auf eine eigene Grundplatte. Die Funktion einer solchen Grundplatte bekannter Mikrotome wird bei dem erfindungsgemäßen Mikrotom von dem modifizierten, d. h. mit der Messerhalteeinrichtung direkt verbundenen Grundgestell übernommen. Hierdurch ergibt sich neben einer erheblichen Kostenreduktion der ganz erhebliche Vorteil einer wesentlich erhöhten Verwindungssteifigkeit sowie Stabilität beim Wirksamwerden der Schneidkräfte, d.h. während des Schneidvorgangs.

Die vom unteren Endabschnitt des Grundgestells nach vorne wegstehenden beiden Seitenwangen können zur direkten und unmittelbaren Aufnahme und Halterung des Schneidelementes vorgesehen sein, die beiden Seitenwangen können jedoch jeweils auch einen verstellbaren Support zur Aufnahme und Halterung des Schneidelementes aufweisen.

Durch die Ausbildung des erfindungsgemäßen Mikrotomes mit zwei Seitenwangen, die vom unteren Endabschnitt des Grundgestelles nach vorne wegstehen, ergibt sich zwischen den Seitenwangen vor und hinter dem Schneidelement, d.h. dem Schneidmesser oder der mit einem Klingenhalter kombinierten Schneidklinge, ein Freiraum, der optimal zum Auffangen von Schnittabfällen bzw. zum Auffangen von Dünnschnitten geeignet ist. Zu diesem Zwecke kann zwischen den beiden Seitenwangen eine Auffangwanne vorgesehen sein.

Während bei bekannten Mikrotomen, insbesondere Rotationsmikrotomen, nicht benötigte Dünnschnitte bzw. nicht benötigtes Trimmaterial üblicherweise gerätemittig über das Schneidelement nach oben hinter die Messerhalteeinrichtung gepinselt werden und auf die Grundplatte hinunterfallen, so daß sich beispielsweise bei der Verarbeitung einer größeren Anzahl Paraffinprobenblöcke ein erheblicher, störender Schnittabfall zwischen der Messerhalteeinrichtung und der Vorderseite des das Grundgestell beinhaltenden Mikrotomgehäuses aufbaut, weist das erfindungsgemäße Mikrotom der zuletzt genannten Ausbildung den Vorteil auf, daß Schnittabfälle zielgerecht in die besagte Auffangwanne hineinfallen. Im Bedarfsfall können zusätzliche Schnittabfallwannen seitlich außerhalb der beiden Seitenwangen angebracht sein.

Zweckmäßig kann es bei dem erfindungsgemäßen Mikrotom sein, wenn die Auffangwanne mit einer Schnittstreckwanne kombiniert ist, die mit einem Wannenabschnitt zwischen die beiden Seitenwangen hineinreicht. Während es sich bei der Auffangwanne-um eine-sogenannte trockene Wanne handelt, ist die Schnittstreckwanne zweckmäßigerweise mit einer geeigneten Flüssigkeit, beispielsweise mit Warmwasser gefüllt, um eine Streckung der Dünnschnitte zu bewirken. Bei einem Mikrotom der zuletzt genannten Art befindet sich die besagte Auffangwanne hinter der Messerhalteeinrichtung, d.h. hinter dem Schneidelement im Bereich zwischen diesem und dem Mikrotomgehäuse und dient - wie ausgeführt worden ist - als Trockenabfallwanne. Die Schnittstreckwanne kann z.B. als beheizbares Wasserbad ausgebildet sein, sie befindet sich direkt unter bzw. vor der Messerhalteeinrichtung, d.h. auf der vom Mikrotomgehäuse entfernten Vorderseite der Messerhalteeinrichtung. Die Auffangwanne und die Schnittstreckwanne können voneinander getrennte selbständige Wannen sein. Desgleichen ist es möglich, die Auffangwanne und die Schnittstreckwanne miteinander integral zu verbinden.

Die gewünschten bzw. benötigten Dünnschnitte können bei einem Mikrotom der zuletzt genannten Art in vorteilhafter Weise auf kürzestem Wege mit Hilfe beispielsweise eines Pinsels direkt nach unten zur Schnittstreckwanne geführt werden, um eine Streckung der Dünnschnitte zu bewirken. Mit dem erfindungsgemäßen Mikrotom ist folglich ein ergonomisches Arbeiten bei erhöhtem Sicherheits- und Arbeitskomfort möglich, weil ein bei bekannten Mikrotomen, insbesondere Rotationsmikrotomen, notwendiges und die Gesundheit schädigendes seitliches Verdrehen des Oberkörpers beim Schnittransfer in ein rechts oder links seitlich neben dem Mikrotom aufgestelltes Schnittstreckbad entfällt. Bei den bekannten Mikrotom-Konzeptionen verbietet sich bislang eine Positionierung des Schnittstreckbades vor der Grundplatte des Mikrotomes auch deshalb, weil die daraus resultierende Längsabmessungsvergrößerung ein Bedienen des Mikrotoms quasi unmöglich wird. Das gilt insbesondere bei manuell zu bedienenden Rotationsmikrotomen.

Alle diese Mängel bekannter Mikrotome, insbesondere Rotationsmikrotome, werden bei dem erfindungsgemäßen Mikrotom auf sehr einfach Weise eliminiert.

Weitere Einzelheiten, Merkmale und Vorteile ergeben sich aus der nachfolgenden Beschreibung von in der Zeichnung schematisch dargestellten Ausführungsbeispielen des erfindungsgemäßen Mikrotomes bzw. wesentlicher Teile desselben.

Es zeigen:
- Figur 1: eine perspektivische Ansicht einer ersten Ausbildung des Grundgestelles des Mikrotoms,
- Figur 2: eine der Figur 1 ähnliche perspektivische Darstellung zur schematischen Verdeutlichung einer zweiten Ausbildung des Grundgestelles des Mikrotoms,
- Figur 3: eine schematische Draufsicht bzw. Schnittdarstellung des Mikrotoms mit einer Auffang- d.h. Trockenwanne,
- Figur 4: eine der Figur 3 ähnliche Darstellung einer Ausbildung des Mikrotoms, bei welchem eine Auffang- bzw. Trockenwanne mit einer mit einer geeigneten Flüssigkeit gefüllten Schnittstreckwanne kombiniert ist, und
- Figur 5: eine den Figuren 1 und 2 ähnliche perspektivische schematische Darstellung einer dritten Ausführungsform des Grundgestelles des Mikrotoms.

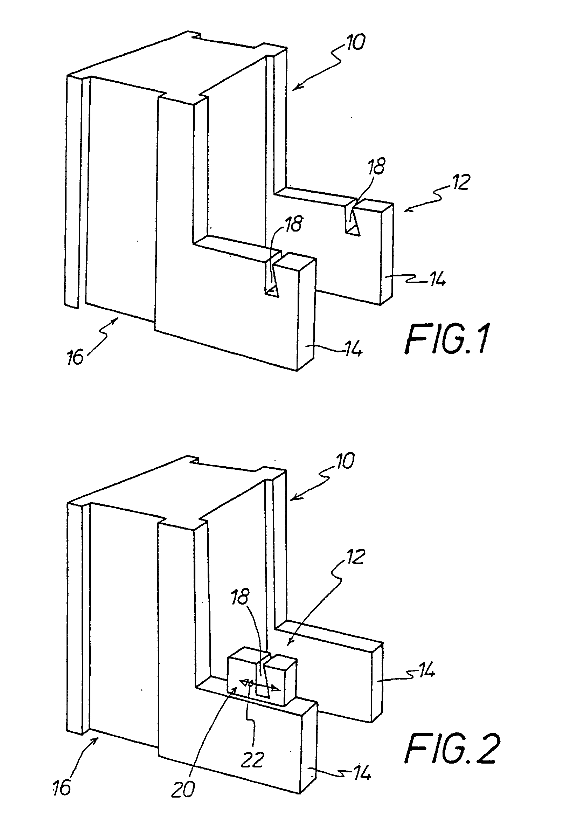

Figur 1 zeigt in einer perspektivischen Ansicht ein Grundgestell 10 eines Mikrotoms, insbesondere eines Rotationsmikrotomes, von welchem eine Messerhalteeinrichtung 12 einstückig wegsteht. Die Messerhalteeinrichtung 12 ist von zwei Seitenwangen 14 gebildet, die vom unteren Endabschnitt 16 des Grundgestelles 10 nach vorne wegstehen. Die beiden Seitenwangen 14 sind jeweils mit einer Aussparung 18 ausgebildet, die zur Aufnahme eines (nicht gezeichneten) Schneidelementes vorgesehen sind. Bei diesem Schneidelement kann es sich um ein Schneidmesser oder um eine mit einem Klingenhalter kombinierte Schneidklinge handeln.

Während die Figur 1 eine Ausbildung verdeutlicht, bei welcher die Aussparungen 18 direkt und unmittelbar in den Seitenwangen 14 ausgebildet sind, zeigt die Figur 2 schematisch eine Ausbildung, bei der die Aussparungen 18 jeweils in einem Support 20 ausgebildet sind, von welchen in Figur 2 nur einer der beiden Supporte 20 zeichnerisch dargestellt ist. Die Supporte 20 sind an den Seitenwangen 14 simultan linear beweglich geführt vorgesehen. Die lineare Beweglichkeit der Supporte 20 ist durch den Doppelpfeil 22 angedeutet.

Auch bei der Ausbildung gemäß Figur 2 stehen die beiden Seitenwangen 14 von dem unteren Endabschnitt 16 des Grundgestells 10 des Mikrotoms, insbesondere Rotationsmikrotomes, nach vorne weg. Die beiden Supporte 20 mit ihren Aussparungen 18 bilden auch bei dieser Ausführungsform die Messerhalteeinrichtung 12, wobei das auch in Figur 2 nicht gezeichnete Schneidelement in Bezug auf das Grundgestell 10 und somit in bezug auf eine Objekthalteeinrichtung 32 wunschgemäß verstellbar ist.

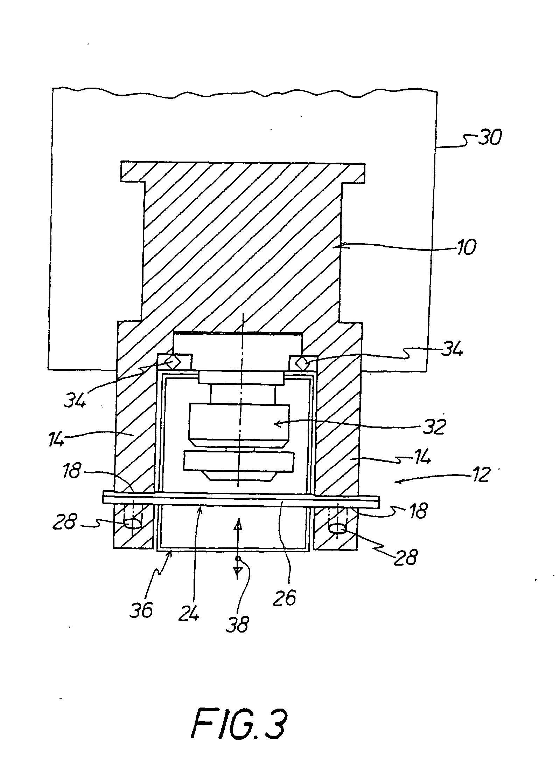

Figur 3 verdeutlicht geschnitten das Grundgestell 10 mit den vom Grundgestell 10 nach vorne wegstehenden Seitenwangen 14, die jeweils mit einer Aussparung 18 ausgebildet sind, um eine Messerhalteeinrichtung 12 für ein Schneidelement 24 zu bilden. Das Schneidelement 24 ist von einem Schneidmesser 26 gebildet, das zwischen den beiden Seitenwangen 14 festgespannt ist. Das ist durch die beiden Gewindelöcher 28 angedeutet, in welche nicht gezeichnete Schraubelemente eingeschraubt sind.

Am Grundgestell 10, das in einem abschnittweise schematisch angedeuteten Mikrotomgehäuse 30 angeordnet ist, ist ein Objekthalteeinrichtung 32 vertikal an Linearführungselementen 34 linear auf und ab beweglich geführt. In die Objekthalteeinrichtung 32 ist eine Dünnschnittprobe einspannbar.

Zwischen den beiden vom Grundgestell 10 nach vorne wegstehenden Seitenwangen 14 ist eine Auffangwanne 36 anordenbar bzw. angeordnet. Die Auffangwanne 36 ist unter dem Schneidelement 24 vorgesehen, so daß sie aus dem Raum zwischen den beiden Seitenwangen 14 herausziehbar und in den besagten Raum auch wieder einschiebbar ist. Das ist durch den Doppelpfeil 38 angedeutet. Die Auffangwanne 36 hat auf die Tiefenabmessung des Mikrotomes folglich keinen Einfluß, so daß das Mikrotom beispielsweise problemlos als manuell zu betätigendes Rotationsmikrotom mit einem vom äußeren Mikrotomgehäuse 30 seitlich wegstehenden Antriebshandrad ausgebildet sein kann.

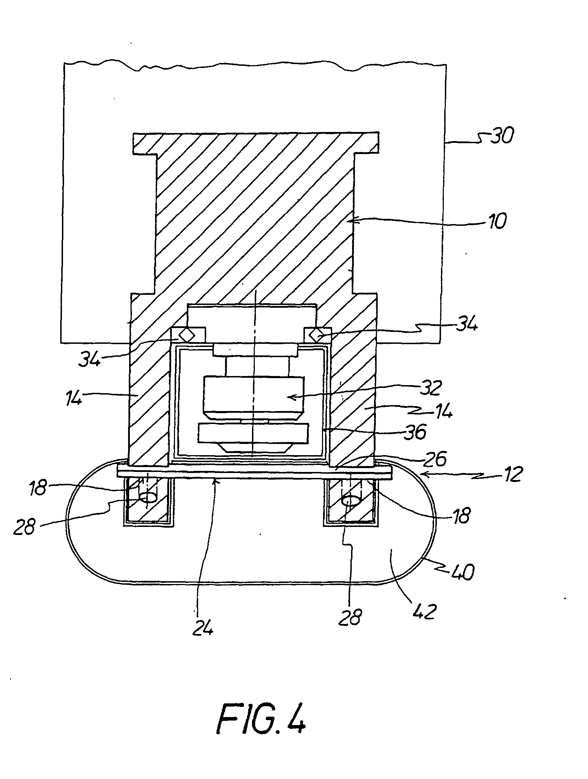

Figur 4 verdeutlicht schematisch in einer der Figur 3 ähnlichen Ansicht eine Ausbildung, bei der die trockene Auffangwanne 36 mit einer Schnittstreckwanne 40 kombiniert ist. Dabei kann die Auffangwanne 36 mit der Schnittstreckwanne 40 verbunden sein, eine andere Möglichkeit besteht darin, daß die Auffangwanne 36 und die Schnittstreckwanne 40 voneinander getrennte Gebilde sind. Die Schnittstreckwanne 40 ist mit einer geeigneten Flüssigkeit, beispielsweise mit Warmwasser 42, gefüllt. Zu diesem Zwecke kann die Schnittstreckwanne 40 mit einer Heizeinrichtung versehen sein. Während die Auffangwanne 36 als Trockenwanne hinter dem Schneidmesser 26 vorgesehen ist, befindet sich die Schnittstreckwanne 40 unter und vor dem Schneidmesser 26, sie erstreckt sich beispielsweise um die Seitenwangen 14 vorderseitig seitlich bis zum Schneidmesser 26 herum.

Gleiche Einzelheiten sind in Figur 4 mit denselben Bezugsziffern wie in Figur 3 bezeichnet, so daß es sich erübrigt, in Verbindung mit Figur 4 alle diese Einzelheiten noch einmal detailliert zu beschreiben.

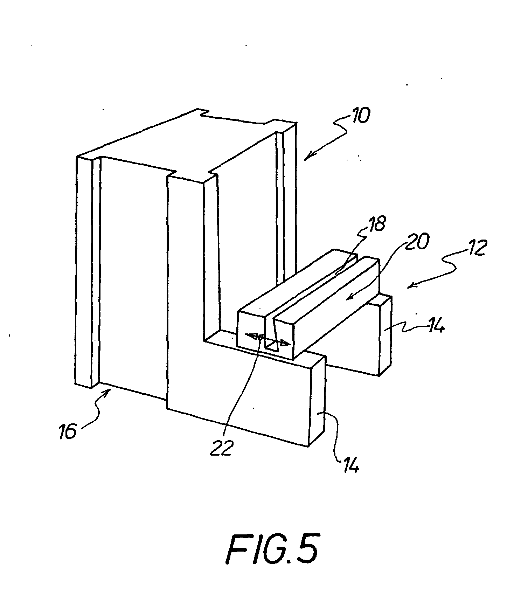

Figur 5 zeigt in einer den Figuren 1 und 2 ähnlichen perspektivischen Ansicht ein Grundgestell 10 eines Mikrotoms, insbesondere eines Rotationsmikrotomes. Vom Grundgestell 10 steht eine Messerhalteeinrichtung 12 einstückig weg. Die Messerhalteeinrichtung 12 ist von zwei Seitenwangen 14 gebildet, die vom unteren Endabschnitt 16 des Grundgestelles 10 nach vorne wegstehen. An den beiden Seitenwangen 14 ist ein verstellbarer Support 20 angeordnet, der die beiden Seitenwangen 14 überbrückt. Der Support 20 ist an den Seitenwangen 14 linear beweglich geführt. Das ist durch den Doppelpfeil 22 verdeutlicht.

Der die beiden Seitenwangen 14 überspannende Support 20 ist mit einer Aussparung 18 ausgebildet, die zur Aufnahme eines (nicht gezeichneten) Schneidelementes bzw. Schneidmessers dient.

## Patentansprüche

1. Mikrotom mit einem Grundgestell (10), an dem eine Objekthalteeinrichtung (32) zur Durchführung einer vertikalen Schnittbewegung vorgesehen ist, und mit einer Messerhalteeinrichtung (12) für ein Schneidelement (24), das von einem Schneidmesser (26) oder von einer mit einem Klingenhalter kombinierten Schneidklinge gebildet ist,
**dadurch gekennzeichnet,**
**daß** die Messerhalteeinrichtung (12) zwei gleich ausgebildete Seitenwangen (14) aufweist, die vom unteren Endabschnitt (16) des Grundgestelles (10) nach vorne wegstehen und die Grundfläche des Grundgestelles (10) nach vorne verlängern, so daß die beiden Seitenwangen (14) für das Grundgestell (10) eine Standflächenvergrößerung bilden.

2. Mikrotom nach Anspruch 1,
**dadurch gekennzeichnet,**
**daß** die Seitenwangen (14) der Messerhalteeinrichtung (12) mit dem Grundgestell (10) verschraubt oder verschweißt sind.

3. Mikrotom nach Anspruch 1,
**dadurch gekennzeichnet,**
**daß** die Seitenwangen (14) der Messerhalteeinrichtung (12) mit dem Grundgestell (10) einstückig ausgebildet sind.

4. Mikrotom nach einem der Ansprüche 1 bis 3,
**dadurch gekennzeichnet ,**
**daß** die beiden Seitenwangen (14) zur direkten, unmittelbaren Aufnahme und Halterung des Schneidelementes (24) vorgesehen sind.

5. Mikrotom nach einem der Ansprüche 1 bis 3,
**dadurch gekennzeichnet,**
**daß** die beiden Seitenwangen (14) jeweils einen verstellbaren Support (20) zur Aufnahme und Halterung des Schneidelementes (24) aufweisen.

6. Mikrotom nach einem der Ansprüche 1 bis 3,
**dadurch gekennzeichnet ,**
**daß** an den beiden Seitenwangen (14) ein verstellbarer Support (20) zur Aufnahme und Halterung eines Schneidelementes (24) vorgesehen ist, wobei der Support (20) die beiden Seitenwangen (14) überbrückt.

7. Mikrotom nach einem der Ansprüche 1 bis 6,
**dadurch gekennzeichnet ,**
**daß** zwischen den beiden Seitenwangen (14) eine Auffangwanne (36) vorgesehen ist.

8. Mikrotom nach Anspruch 7,
**dadurch gekennzeichnet,**
**daß** die Auffangwanne (36) mit einer Schnittstreckwanne (40) kombiniert ist, die mit einem Wannenabschnitt zwischen die beiden Seitenwangen (14) hineinreicht.

## Claims

1. A microtome comprising a base frame (10) on which is provided a specimen holding device (32) for performing a vertical cutting movement, and a knife holding device (12) for a cutting element (24) which is formed by a cutting knife (26) or a cutting blade combined with a blade holder, **characterised in that** the knife holding device (12) has two side plate portions (14) which are of identical configuration and which project forwardly from the lower end portion (16) of the base frame (10) and prolong the base surface of the base frame (10) forwardly so that the two side plate portions (14) form for the base frame (10) an increase in the support surface on which the base frame stands.

2. A microtome as set forth in claim 1 **characterised in that** the side plate portions (14) of the knife holding device (12) are screwed or welded to the base frame (10).

3. A microtome as set forth in claim 1 **characterised in that** the side plate portions (14) of the knife holding device (12) are formed integrally with the base frame (10).

4. A microtome as set forth in one of claims 1 through 3 **characterised in that** the two side plate portions (14) are provided for directly and immediately receiving and holding the cutting element (24).

5. A microtome as set forth in one of claims 1 through 3 **characterised in that** the two side plate portions (14) each have a respective displaceable support (20) for receiving and holding the cutting element (24).

6. A microtome as set forth in one of claims 1 through 3 **characterised in that** a displaceable support (20) for receiving and holding a cutting element (24) is provided on the two side plate portions (14), the support (20) bridging across the two side plate portions (14).

7. A microtome as set forth in one of claims 1 through 6 **characterised in that** a catch trough (36) is provided between the two side plate portions (14).

8. A microtome as set forth in claim 7 **characterised in that** the catch trough (36) is combined with a section stretching trough (40) which extends with a trough portion between the two side plate portions (14).

## Revendications

1. Microtome avec un bâti de base (10) sur lequel est prévu un dispositif de fixation d'un objet (32) pour l'exécution d'une course de coupe verticale, et avec un dispositif de fixation d'un couteau (12) pour un élément à découper (24) formé une lame à découper combinée avec un support de lame,
**caractérisé en ce que**
le dispositif de fixation du couteau (12) présente deux joues latérales (14) conçues de façon similaire, lesquelles dépassent vers l'avant à partir de la partie d'extrémité (16) du bas du bâti de base (10) et rallongent vers l'avant la surface de base du bâti de base (10), de sorte que les deux joues latérales (14) forment un agrandissement de l'encombrement pour le bâti de base (10).

2. Microtome selon la revendication 1, **caractérisé en ce que** les joues latérales (14) du dispositif de fixation d'un couteau (12) sont vissées ou soudées sur le bâti de base (10).

3. Microtome selon la revendication 1, **caractérisé en ce que** les joues latérales (14) du dispositif de fixation d'un couteau (12) sont formées d'une seule pièce avec le bâti de base (10).

4. Microtome selon l'une quelconque des revendications 1 à 3, **caractérisé en ce que** les deux joues latérales (14) sont prévues pour la réception directe et la fixation de l'élément à découper (24).

5. Microtome selon l'une quelconque des revendications 1 à 3, **caractérisé en ce que** les deux joues latérales (14) présentent respectivement un support déplaçable (20) pour la réception et la fixation de l'élément à découper (24).

6. Microtome selon l'une quelconque des revendications 1 à 3, **caractérisé en ce qu'**un support déplaçable (20) pour la réception et la fixation d'un élément à découper (24) est prévu sur les deux joues latérales (14), moyennant quoi le support (20) chevauche les deux joues latérales (14).

7. Microtome selon l'une quelconque des revendications 1 à 6, **caractérisé en ce qu'**un baquet collecteur (36) est prévu entre les deux joues latérales (14).

8. Microtome selon la revendication 7, **caractérisé en ce que** le baquet collecteur (36) est combiné avec un baquet d'étirage et de découpage (40) qui pénètre avec une partie du baquet entre les deux joues latérales (14).
